# EUROPEAN PATENT SPECIFICATION

(11) **EP 0 418 090 B1**
(45) Date of publication and mention of the grant of the patent: **29.11.1995**
(21) Application number: 90310059.2
(22) Date of filing: 13.09.1990
(51) Int. Cl.: E05G 7/00, B60P 3/03

(54) **A transfer device**
Übergabevorrichtung
Dispositif de transfert

(30) Priority: 13.09.1989 IE 292889
(43) Date of publication of application: 20.03.1991
(73) Proprietor: Murphy, James Francis, Trim, County Meath (IE)
(72) Inventor: Murphy, James Francis, Trim, County Meath (IE)
(74) Representative: Weldon, Michael James

(56) References cited:
- EP-A- 0 084 916
- WO-A-85/01495
- FR-A- 2 482 533

## Description

This invention relates to a security transfer device for transferring valuables between a vehicle and a building such as a bank, or another vehicle.

A security transfer device of the type described in the prior art portion of Claim 1 is disclosed in EP-A-0084916. The device has a support frame comprising a fixed outer tunnel interconnected with a fixed inner tunnel. A slidable tunnel is mounted between the fixed tunnels. A lockable security door is provided on the fixed inner tunnel. To prevent unauthorised retraction of the slidable tunnel when it is in an extended position, a ratchet mechanism is provided between the outer tunnel and the slidable tunnel.

The present invention is directed towards improving the security of such a device.

Patent Specification FR-2482533-A discloses a transfer device comprising a conveyor mounted within a duct slidably mounted at a vehicle sidewall for extension to engage an associated footpath mounted receiving station.

According to the invention, there is provided a security transfer device for transferring valuables between a building and a vehicle each having a transfer opening in a face thereof, comprising a support frame for mounting in one of said transfer openings, a duct slidably mounted on the support frame and movable through said one of said openings between a retracted stored position and an extended in-use position for abutment against the face surrounding the other of said openings, a releasable stop means mounted between the duct and the support frame and being operable to prevent unauthorised retraction of the duct from an extended position toward the retracted position, and a lockable security closure member mounted within the duct, a releasable locking device being provided for the security closure member comprising a bolt movable between a retracted disengaged position and a locking position in engagement with a complementary receiver slot, characterised in that the locking device is automatically operable when the duct is in a retracted position, the bolt being mounted on the duct for engagement with the receiver slot in the closure member, the bolt being spring biased towards the disengaged position, a cam follower on the bolt and an associated cam on the support frame, the cam being engagable with the cam follower when the duct is in a retracted position to urge the bolt against spring bias into the locking position when the duct is in a retracted stored position on the support frame.

In another embodiment an additional duct inner end closure member is provided at an inner end of the support frame.

In a further embodiment a locking mechanism is provided to lock the duct on the support frame when the duct is in a retracted stored position.

In a preferred embodiment the duct inner end closure member is mounted by hinge means at one side of the support frame and the duct locking mechanism comprises a number of hinge bolts which extend outwardly of a hinge side of the inner end closure member for locking engagement with slots at an inner end of the duct when the duct is in a retracted stored position.

In another embodiment the releasable stop means is a ratchet mechanism mounted between the duct and the support frame and operable to prevent unauthorised movement of the duct from an extended position towards the retracted stored position, the ratchet mechanism comprising a rod rotatably mounted on the support frame, the rod having a serrated shank slidable within a complementary ratchet cylinder mounted on the duct, the ratchet cylinder having a pawl for engagement with serrations on the rod to prevent retraction of the duct from an extended position towards the retracted stored position, the rod rotatable within the ratchet cylinder to disengage the pawl from the ratchet teeth to release the ratchet mechanism, and means to re-engage the ratchet mechanism comprising a cam follower on one of the rod and the ratchet cylinder for engagement with a cam on the other of the rod and the ratchet cylinder, the cam having a profile defining an operating position with the duct retracted such that upon retraction of the duct the cam and the cam follower engage to rotate the rod into a normal operating position.

In a further embodiment an electric motor drive is provided for movement of the duct on the support frame.

In another embodiment the duct is slidably mounted on the support frame by track means comprising a number of rollers mounted on one of the duct and the support frame, the rollers rotatably engaging associated tracks on the other of the duct and the support frame.

The invention will be more clearly understood from the following description of some embodiments thereof, given by way of example only, with reference to the accompanying drawings, in which:
Fig 1 is a side, partially sectioned view of a security transfer device according to the invention, shown mounted in a wall,
Fig 2 is a front elevational view of the transfer device,
Fig 3 is a rear elevational view of the transfer device,
Fig 4 is a detail partially sectioned side view of portion of the transfer device,
Fig 5 is a detail partially sectioned plan view of portion of the transfer device,
Fig 6 is a detail partially sectioned side view of a ratchet mechanism forming portion of the transfer device,
Fig 7 is a partially sectioned front detail view of track means for slidably supporting a duct in the housing of the transfer device,
Fig 8 is a detail side view of the track means of Fig 7,
Fig 9 is a side view of another security transfer device according to the invention,
Fig 10 is another side view of the security transfer device of Fig 9 with a duct portion of the device shown in a retracted stored position,
Fig 11 is a front view of the transfer device of Fig 9,
Fig 12 in a rear view of the transfer device of Fig 9,
Fig 13 is a side partially sectioned view of the transfer device of Fig 9 taken along the line XIII-XIII of Fig 11, the transfer device being shown in use mounted in a wall of a building,
Fig 14 is a detail side view of a ratchet portion of the device,
Fig 15 is a detail side view illustrating locking means for the duct.

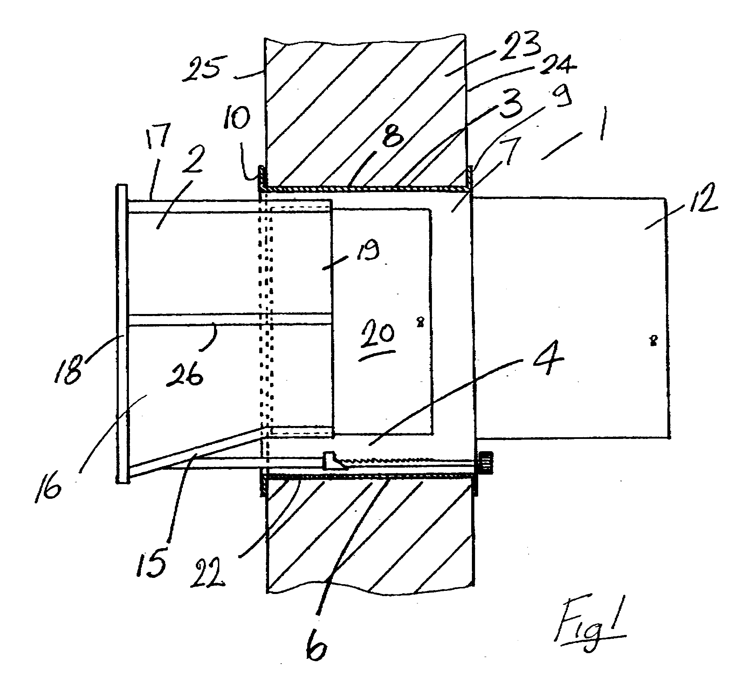

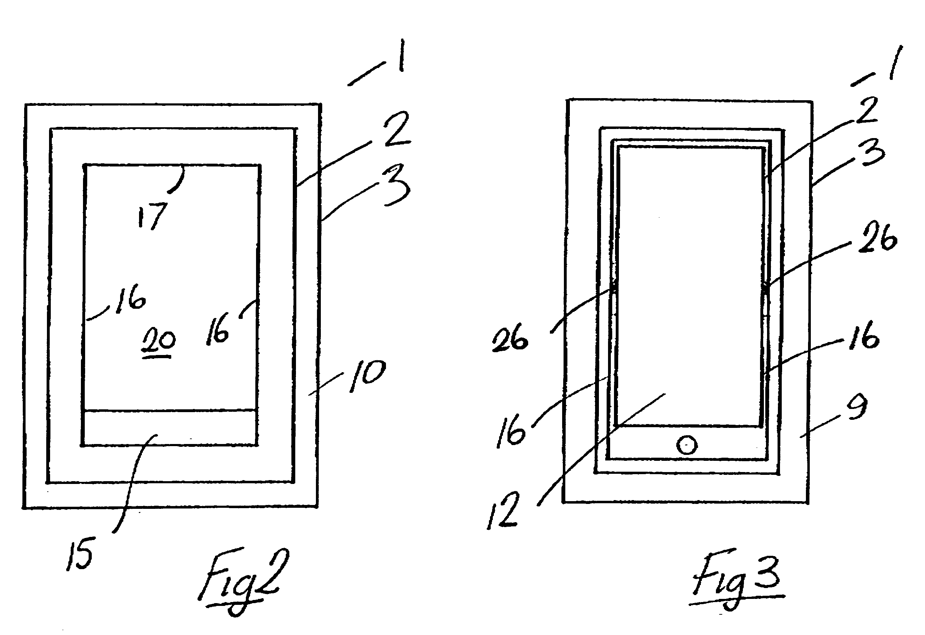

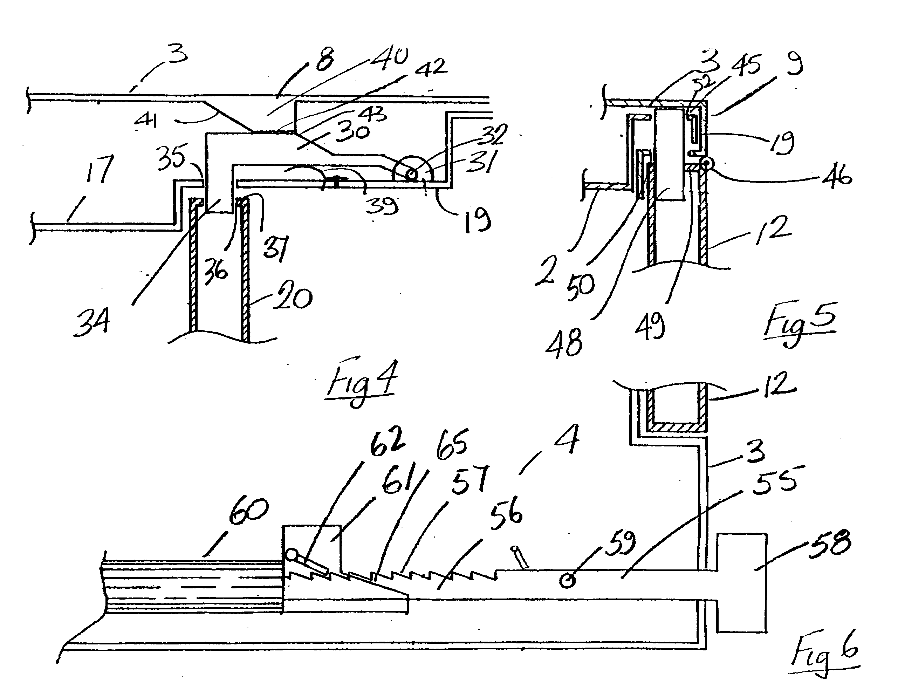

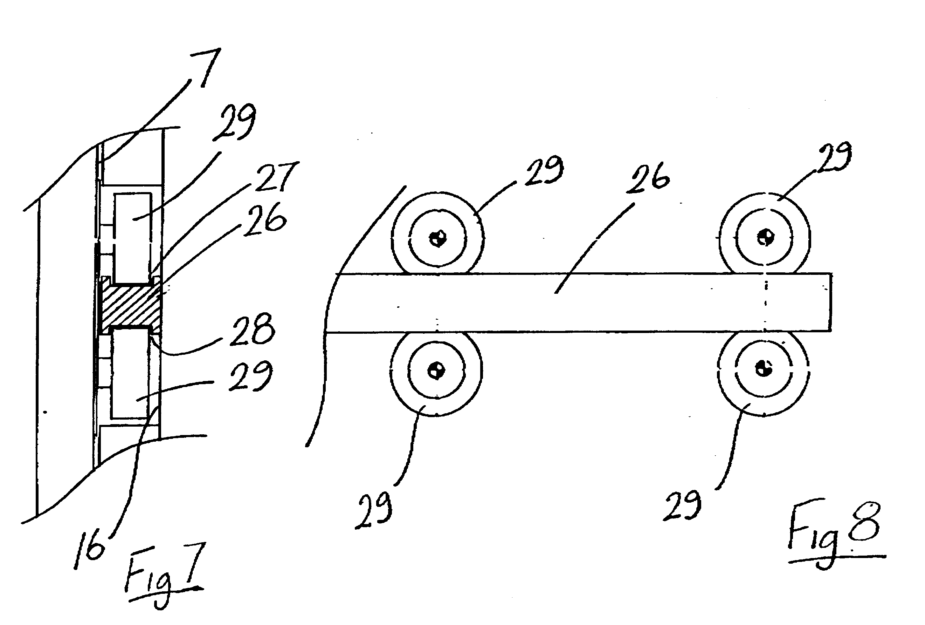

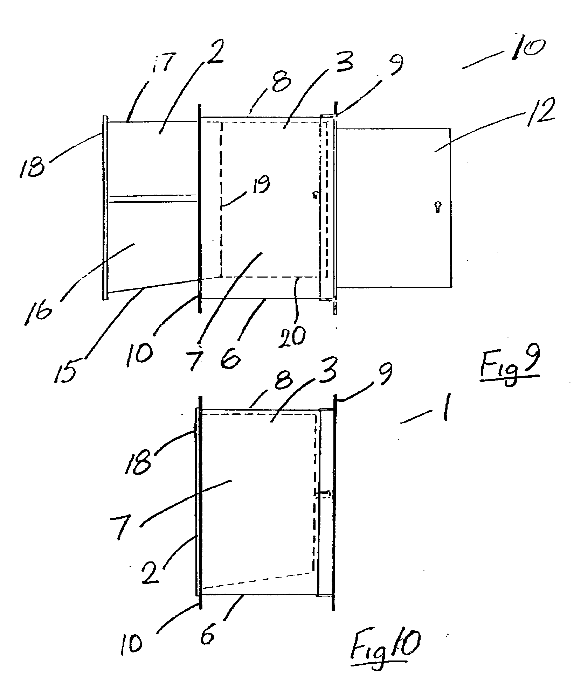

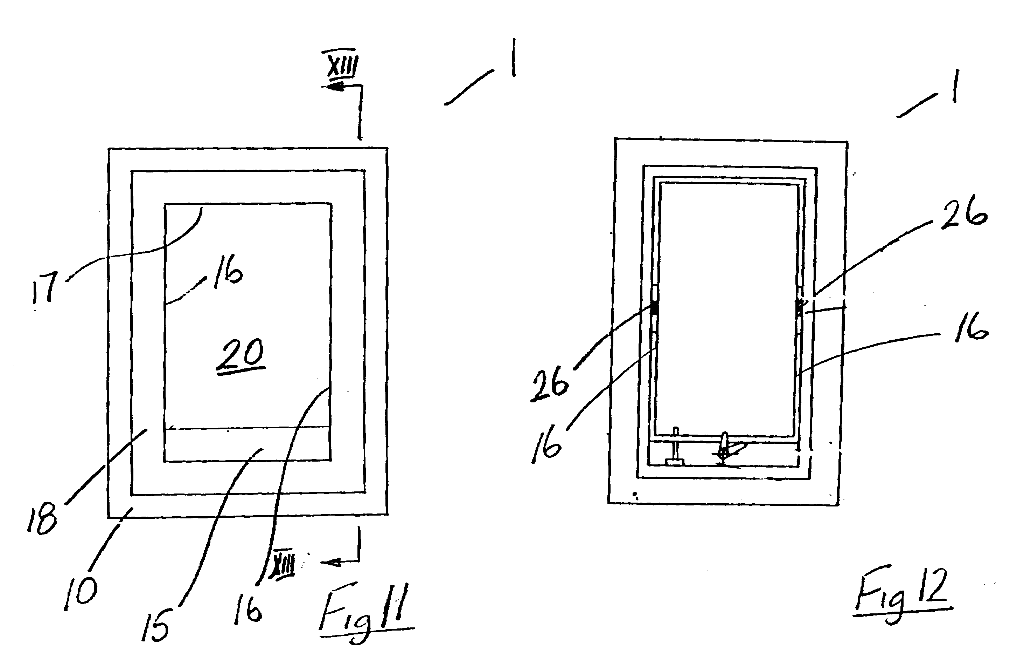

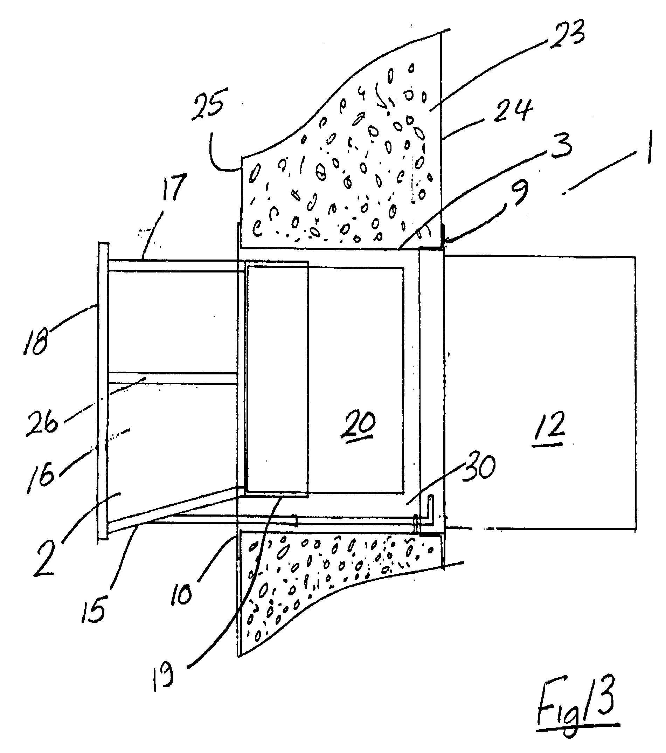

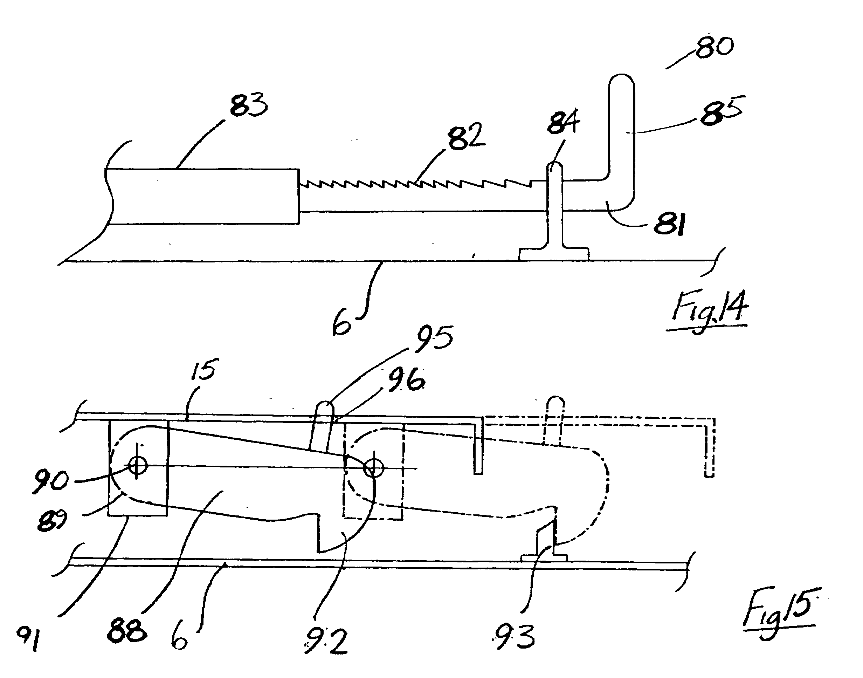

Referring to the drawings and initially to Figs 1 to 8 thereof, there is illustrated a security transfer device according to the invention indicated generally by the reference numeral 1. The security transfer device 1 comprises a duct 2 slidably mounted within a support frame which in this case comprises a housing 3. The duct 2 is movable between a retracted stored position, within the housing 3, and an extended in-use position as shown in Fig 1. A ratchet mechanism indicated generally by the reference numeral 4 extends between the duct 2 and the housing 3.

The housing 3 is of rectangular section having a bottom 6, upstanding side walls 7, a top 8, and a flanged inner end 9 and a flanged outer end 10. A lockable door 12 closes the inner end 9.

The duct 2 is also of rectangular section having a bse 15, side walls 16, a top 17 and has an open flanged front end 18 and a rear end 19 closed by a lockable security door 20 typically of bullet-proof steel. It will be noted that the base 15 slopes upwardly between the front end 18 and the rear end 19. Fig. 1 shows the security transfer device 1 mounted in an opening 22 in a wall 23 of a building such as a bank, the wall 23 having an inside face 24 and an outside face 25, the duct 2 mounted on the housing 3 behind the outside face 25 and movable through the opening 22. A handle is provided on an inside face of the security door 20.

Track means for slidably mounting the duct 2 in the housing 3 comprises a pair of horizontal tracks 26 fitted centrally on outside faces of the side walls 16 of the duct 2. Each track 26 has an upper slot 27 and a lower slot 28 extending along its length to receive rollers 29 mounted on the interior faces of the side walls 7 of the housing 3. As will be seen from Figs. 7 and 8 the rollers 29 are arranged in a number of spaced-apart pairs, each pair of rollers 29 receiving a track 26 there between.

Referring now in particular to Fig. 4. A conventional deadlock is provided on the security door 20. In addition to this, an L-shaped locking bolt 30 is pivotally mounted on a top 17 of the duct 2 at the rear end 19 of the duct 2 by a bracket 31 and pivot pin 32. An outer end 34 extends through a hole 35 in the top 17 for engagement with a complementary receiver slot 36 provided in an upper edge 37 of the security door 20.

A leaf spring 39 mounted on the top 17 of the duct 2 engages an underside of the locking bolt 30 urging the locking bolt 30 upwardly towards a retracted disengaged position. A cam block 40 projects inwardly of the top 8 of the housing 3 and has a sloped front face 41 and a bottom face 42 which together form a cam surface for engagement with a back 43 of the bolt 30 which forms a cam follower to urge the locking bolt 30 against spring bias into engagement in a locking position with the receiver slot 36 when the duct 2 is in the stored position as illustrated in Fig 4.

Referring now to Fig 5, at the inner end of the housing 3 a channel 45 is formed at the side walls of the housing 3 for reception of the inner end 19 of the duct 2. The door 12 is mounted by a hinge 46 at one side of the housing 3. A number of hinge bolts 48 extend outwardly of a hinge side 49 of the door 12 for locking engagement through openings 50 in an inner side wall of the channel 45 with slots 52 in the inner end 9 of the duct 2 when the duct 2 is in the stored position illustrated in Fig 5.

Referring now to Fig 6 in which the ratchet mechanism 4 is illustrated. The ratchet mechanism 4 comprises a rod 55 rotatably mounted on the housing 3 and having a serrated shank 56 with ratchet teeth 57 and an operating knob 58 at an end of the rod 55 extending rearwardly of the housing 3. A spigot 59 forming a cam follower extends laterally of the rod 55 between the shank 56 and the knob 58. A complementary ratchet cylinder 60 is mounted on the base 15 of the duct 2. The ratchet cylinder 60 has an inner end 61 housing a pivotable pawl 62 for engagement with the ratchet teeth 57. It will be noted that the pawl 62 slides over the teeth 57 as the duct 2 is moved from a stored position to an extended position, however, the pawl 62 engages the teeth 57 to prevent movement of the duct 2 back into the housing 3 from an extended position towards the stored position. The rod 55 is rotatable within the ratchet cylinder 60 to disengage the pawl 62 from the ratchet teeth 57 to allow retraction of the duct 2. Upon retraction a cam surface 65 on the inner end 61 of the ratchet cylinder 60 engages the spigot 59 to rotate the rod 55 into a normal operating position in which the ratchet teeth 57 are aligned with the pawl 62 as the duct 2 approaches the stored position, the pawl 62 engaging against the rod 55 forwardly of the ratchet teeth 57.

In use, the security transfer device 1 is mounted in an opening 22 in wall 23 of a bank or other building as shown in Fig. 1. When in the retracted stored position the duct 2 is locked within the housing 3 by the hinge bolts 48 of the door 12. Both the security door 20 on the duct 2 and the door 12 on the housing 3 are closed and locked. To transfer cash or other valuables using the security transfer device 1 a security van parks alongside the outside face 25 of the wall so that an inlet opening in a face of the security van through which money is delivered is directly opposite the duct 2. Then a person inside the bank opens the door 12 on the housing 3, thus releasing the duct 2 and pushes the duct 2 outwardly from the retracted stored position within the housing 3 to the extended in-use position in which the outer end 18 of the duct 2 abuts the face of the security van surrounding the inlet opening on the security van. The duct 2 is pushed outwardly until it engages against the side of the security van. It will be noted that the ratchet mechanism 4 automatically locks the duct 2 in the extended position preventing the duct 2 from being pushed back into the housing 3 from outside the building. As the duct 2 is moved forwardly the locking bolt 30 for the security door 20 (see Fig 4) moves clear of the cam block 40 and the leaf spring 39 pivots the locking bolt 40 upwardly into a disengaged position. When the duct 2 is engaged against the security van the security door 20 at the rear end 19 of the duct 2 is opened and cash and\or other valuables can be transferred between the bank and the security van through the duct 2. Having completed the cash transfer the security door 20 is closed and locked. Then the rod 55 of the ratchet mechanism 4 is rotated by the knob 58 to release the ratchet mechanism 4. Now the duct 2 can be withdrawn into the housing 3 and returned to the stored position. As the duct 2 is withdrawn the spigot 59 on the rod 55 abuts and rides over the cam surface 65 to automatically realign the ratchet mechanism 4 into the normal operating position. Finally the door 12 on the housing 3 is shut and locked, the hinge bolts engaging the slots 52 at the inner end 19 of the duct 2 to lock the duct 2 within the housing 3.

It will be appreciated that the security transfer device 1 allows a direct transfer of cash between the bank and the security van and the security guard within the security van and bank personnel are well protected against any robbery attempt throughout operation of the security transfer device 1 and the cash transfer.

It will also be noted in some cases the housing for the duct may be integrally formed with the wall of the building.

While in the embodiment described herein the security transfer device is shown mounted in a wall of a building, it is also envisaged that in some cases the security transfer device may be mounted on a security van or truck.

Referring now to Figs 9 to 15, there is illustrated another security transfer device according to the invention indicated generally by the reference numeral 70. The security transfer device 70 is largely similar to the security transfer device described previously with reference to Figs 1 to 8 and like parts are assigned the same reference numerals.

In this case the ratchet mechanism indicated generally by the reference numeral 80 is mounted within the housing 3 and extends between the duct 2 and the housing 3. The ratchet mechanism 80 comprises a rod 81 having a serrated shank 82 which is slidable and partially rotatable within a complimentary ratchet cylinder 83. The ratchet cylinder 83 is attached to the base 15 of the duct 2 and a rod 81 is supported in a bracket 84 at an inner end of the bottom 6 of the housing 3. The rod 18 has an operating handle 85 at it's inner end.

Fig 15 shows locking means for locking the duct 2 in the stored position. The locking means comprise a latch 88 having a front end 89 pivotally mounted by a pivot pin 90 on a bracket 91 depending from the base 15 of the duct 2. A hooked rear end 92 of the latch 88 is releasably engagable with a catch member 93 upstanding on the bottom 6 of the housing 3 adjacent the inner end of the housing 3. A pin 95 extends upwardly from the latch 38 passing through a hole 96 in the base 15 of the duct 2, the pin 95 to move the latch 88 to disengage it from the catch member 93. Engagement of the latch 88 with the catch member 93 is shown in broken outline in Fig 15.

The security transfer device 70 is operated in similar fashion to the security transfer device described previously with reference to Figs 1 to 8. In this case, however, the duct 2 is locked in the stored position by the locking means. As the duct 2 is withdrawn the hooked end 92 of the latch 88 abuts and rises over the catch member 93 to automatically engage the catch member 93.

## Claims

1. A security transfer device (1) for transferring valuables between a building and a vehicle each having a transfer opening in a face thereof, comprising a support frame (3) for mounting in one of said transfer openings, a duct (2) slidably mounted on the support frame (3) and movable through said one of said openings between a retracted stored position and an extended in-use position for abutment against the face surrounding the other of said openings, a releasable stop means (4) mounted between the duct (2) and the support frame (3) and being operable to prevent unauthorised retraction of the duct (2) from an extended position toward the retracted position, and a lockable security closure member (20) mounted within the duct (2), a releasable locking device being provided for the security closure member (20) comprising a bolt (30) movable between a retracted disengaged position and a locking position in engagement with a complementary receiver slot (36), characterised in that the locking device is automatically operable when the duct (2) is in a retracted position, the bolt (30) being mounted on the duct (2) for engagement with the receiver slot (36) in the closure member (20), the bolt (30) being spring biased towards the disengaged position, a cam follower (43) on the bolt (30) and an associated cam (40) on the support frame (3), the cam (40) being engagable with the cam follower (43) when the duct (2) is in a retracted position to urge the bolt (30) against spring bias into the locking position when the duct (2) is in a retracted stored position on the support frame (3).

2. A security transfer device (1) as claimed in Claim 1, characterised in that an additional duct inner end closure member (12) is provided at an inner end (9) of the support frame (3).

3. A security transfer device (1) as claimed in any one of the preceding claims, characterised in that a locking mechanism (48) is provided to lock the duct (2) on the support frame (3) when the duct (2) is in a retracted stored position.

4. A security transfer device (1) as claimed in Claim 3, characterised in that the duct inner end closure member (12) is mounted by hinge means (46) at one side of the support frame (3) and the duct locking mechanism comprises a number of hinge bolts (48) which extend outwardly of a hinge side of the inner end closure member (12) for locking engagement with slots (52) at an inner end (9) of the duct (2) when the duct (2) is in a retracted stored position.

5. A security transfer device as claimed in any one of the preceding claims, characterised in that the releasable stop means is a ratchet mechanism (4) mounted between the duct (2) and the support frame (3) and operable to prevent unauthorized movement of the duct (2) from an extended position towards the retracted stored position, the ratchet mechanism (4) comprising a rod (55) rotatably mounted on the support frame (3), the rod (55) having a serrated shank (56) slidable within a complementary ratchet cylinder (60) having a pawl (62) for engagement with serration on the rod, to prevent retraction of the duct from an extended position towards the retracted stored position, the rod (55) rotatable within the ratchet cylinder (60) to disengage the pawl from the ratchet teeth to release the ratchet mechanism, and means to reengage the ratchet mechanism comprising a cam follower (59) on one of the rod (55) and the ratchet cylinder (60) for engagement with a cam (65) on the other of the rod (55) and the ratchet cylinder (60), the cam (65) having a profile defining an operating position with the duct (2) retracted such that upon retraction of the duct (2) the cam (65) and cam follower (59) engage to rotate the rod (55) into a normal operating position.

6. A security transfer device (1) as claimed in any one of the preceding claims, characterised in that an electric motor drive is provided for movement of the duct (2) on the support frame (3).

7. A security transfer device (1,) as claimed in any one of the preceding claims, characterised in that the duct (2,) is slidably mounted on the support frame (3,) by track means comprising a number of rollers (29) mounted on one of the duct (2,) and the support frame (3,), the rollers (29) rotatably engaging associated tracks (26) on the other of the duct (2,) and the support frame (3,).

## Patentansprüche

1. Eine Sicherheitsübergabevorrichtung zur Uebergabe von Wertsachen zwischen einem Gebäude und einem Fahrzeug, welche beide an einer Seite eine Uebergabeöffnung aufweisen, umfassend einen Tragrahmen (3) zur Montage in einer dieser Uebergabeöffnungen, eine Röhre (2), welche in dem Tragrahmen (3) durch diese Oeffnung zwischen einer zurückgezogenen Parkposition und einer ausgefahrenen Gebrauchsposition verschiebbar montiert ist und in der Gebrauchsposition an der Fläche anliegt, welche die andere Oeffnung umgibt, lösbare Haltemittel (4), welche zwischen der Röhre (2) und dem Tragrahmen (3) montiert sind und dazu einsetzbar sind, um ein unbefugtes Zurückziehen der Röhre (2) von der ausgefahrenen Position in die zurückgezogene Position zu verhindern, und ein einrastbares Sicherheitsschliesselement (20), welches innerhalb der Röhre (2) montiert ist, wobei eine lösbare Rastvorrichtung für das Sicherheitsschliesselement (20) vorgesehen ist, welche einen Bolzen (30) umfasst, der zwischen einer zurückgezogenen, entriegelten Position und einer Rastposition im Eingriff mit einem entsprechenden Aufnahmeschlitz (36) bewegbar ist, dadurch gekennzeichnet, dass die Rastvorrichtung automatisch betätigt wird, wenn sich die Röhre (2) in der zurückgezogenen Position befindet, wobei der Bolzen (30) auf der Röhre (2) für den Eingriff in den Aufnahmeschlitz (36) am Schliesselement (30) montiert ist, der Bolzen (30) durch eine Feder in Richtung auf die entriegelte Position vorgespannt ist, dass ein Nockenabtaster (43) auf dem Bolzen (30) und ein zugehöriger Nocken (40) auf dem Tragrahmen (3) vorhanden sind, wobei der Nocken (40) mit dem Nockenabtaster (43) in Eingriff kommt, wenn sich die Röhre (2) in einer zurückgezogenen Position befindet, und den Bolzen (30) gegen die Federspannung in die Raststellung zwingt, wenn sich die Röhre (2) auf dem Tragrahmen (3) in der zurückgezogenen Parkposition befindet.

2. Eine Sicherheitsübergabevorrichtung (1) nach Anspruch 1, dadurch gekennzeichnet, dass ein zusätzliches Schliesselement (12) für das innere Ende der Röhre vorgesehen ist, welches sich am inneren Ende des Tragrahmens (3) befindet.

3. Eine Sicherheitsübergabevorrichtung (1) nach einem der vorhergehenden Ansprüche, dadurch gekennzeichnet, dass ein Rastmechanismus (48) vorgesehen ist, welcher die Röhre (2) auf dem Tragrahmen (3) verrastet, wenn sich die Röhre (2) in der zurückgezogenen Parkposition befindet.

4. Eine Sicherheitsübergabevorrichtung (1) nach Anspruch 3, dadurch gekennzeichnet, dass das Schliesselement (12) für das innere Ende der Röhre Mittels Scharniermitteln (46) an einer Seite des Tragrahmens (3) montiert ist, und dass der Röhren-Rastmechanismus eine Anzahl von Scharnierbolzen (48) umfasst, welche sich auf einer Scharnierseite des Innenend-Schliesselements (12) nach auswärts erstrecken und rastend in am inneren Ende der Röhre (2) angeordnete Schlitze (52) eingreifen, wenn die Röhre (2) sich in einer zurückgezogenen Parkposition befindet.

5. Eine Sicherheitsübergabevorrichtung nach einem der vorhergehenden Ansprüche, dadurch gekennzeichnet, dass die lösbaren Haltemittel als Sperrklinkenmechanismus (4) ausgebildet sind, welcher zwischen der Röhre (2) und dem Tragrahmen (3) montiert ist und dazu einsetzbar ist, um eine unbefugte Bewegung der Röhre (2) von der ausgefahrenen Position in die zurückgezogene Parkposition zu verhindern, wobei der Sperrklinkenmechanismus (4) eine drehbar auf dem Tragrahmen montierte Stange (55) umfasst, welche Stange (55) einen sägeartig gezackten Schaft (56) aufweist, der innerhalb eines entsprechenden Sperrklinkenzylinders (60) verschiebbar ist, der eine Sperrklinke (62) für den Eingriff mit der Sägezahnung auf der Stange hat, um ein Zurückziehen der Röhre aus einer ausgezogenen Position in eine zurückgezogenen Parkposition zu verhindern, wobei die Stange (55) innerhalb des Sperrklinkenzylinders (60) drehbar ist, um die Sperrklinke von den Sperrklinkenzähnen zu lösen und den Sperrklinkenmechanismus freizugeben, und wobei Mittel für die Reaktivierung des Sperrklinkenmechanismus vorgesehen sind, welche einen Kulissenabtaster (59) auf der Stange (55) oder dem Sperrklinkenzylinder (60) für den Eingriff mit einer Kulisse (65) auf dem Sperrklinkenzylinder (60) oder der Stange (55) umfassen, wobei die Kulisse (65) eine Profil zur Festlegung einer Arbeitsstellung bei zurückgezogener Röhre (2) hat, derart, dass beim Zurückziehen der Röhre (2) die Kulisse (65) und der Kulissenabtaster (59) miteinander in Eingriff kommen und die Stange (55) in die normale Arbeitsstellung drehen.

6. Eine Sicherheitsübergabevorrichtung (1) nach einem der vorhergehenden Ansprüche, dadurch gekennzeichnet, dass ein Antrieb mit einem elektrischen Motor für die Bewegung der Röhre (2) auf dem Tragrahmen (3) vorgesehen ist.

7. Eine Sicherheitsübergabevorrichtung (1) nach einem der vorhergehenden Ansprüche, dadurch gekennzeichnet, dass die Röhre (2) mittels Spurmitteln verschiebbar auf dem Tragrahmen (3) montiert ist, welche Spurmittel eine Anzahl von Rollen (29) umfassen, welche an der Röhre (2) oder dem Tragrahmen (3) montiert sind, wobei die Rollen (29) in zugehörigen Spuren (26) laufen, die am Tragrahmen (3) oder der Röhre (2) vorgesehen sind.

## Revendications

1. Dispositif de transfert de sécurité (1) pour transférer des objets de valeur entre un bâtiment et un véhicule, chacun ayant une ouverture de transfert dans une de ses faces, comprenant un cadre de support (3) à monter dans l'une desdites ouvertures de transfert, un conduit (2) monté de manière à pouvoir coulisser sur le cadre de support (3) et déplaçable à travers ladite une desdites ouvertures entre une position rétractée rangée et une position étendue d'utilisation, pour venir en butée contre la face entourant l'autre desdites ouvertures, un moyen d'arrêt déverrouillable (4) monté entre le conduit (2) et le cadre de support (3) et pouvant être actionné pour empêcher la rétraction non autorisée du conduit (2) d'une position étendue vers la position rétractée, et un organe de fermeture de sécurité verrouillable (20) monté à l'intérieur du conduit (2), un dispositif de verrouillage déverrouillable étant prévu pour l'organe de fermeture de sécurité (20) comprenant un pêne (30) déplaçable entre une position désengagée rétractée et une position de verrouillage en engagement avec une fente réceptrice complémentaire (36), caractérisé en ce que le dispositif de verrouillage est actionnable automatiquement lorsque le conduit (2) est dans une position rétractée, le pêne (30) étant monté sur le conduit (2) pour s'engager avec la fente réceptrice (36) dans l'organe de fermeture (20), le pêne (30) étant préorienté au moyen d'un ressort dans la position désengagée, une contre-came (43) étant prévue sur le pêne (30) et une came associée (40) étant prévue sur le cadre de support (3), la came (40) pouvant s'engager avec la contre-came (43) lorsque le conduit (2) est dans une position rétractée, de manière à forcer le pêne (30) à l'encontre de la préorientation au moyen du ressort dans la position de verrouillage lorsque le conduit (2) est dans une position rangée rétractée sur le cadre de support (3).

2. Dispositif de transfert de sécurité (1) selon la revendication 1, caractérisé en ce qu'un organe supplémentaire de fermeture (12) de l'extrémité interne du conduit est prévu à une extrémité interne (9) du cadre de support (3).

3. Dispositif de transfert de sécurité (1) selon l'une quelconque des revendications précédentes, caractérisé en ce qu'un mécanisme de verrouillage (48) est prévu pour verrouiller le conduit (2) sur le cadre de support (3) lorsque le conduit (2) est dans une position rangée rétractée.

4. Dispositif de transfert de sécurité (1) selon la revendication 3, caractérisé en ce que l'organe de fermeture (12) de l'extrémité interne du conduit est monté à l'aide d'un moyen de type charnière (46) d'un côté du cadre de support (3) et le mécanisme de verrouillage du conduit comprend un certain nombre d'axes d'articulation (48) qui s'étendent vers l'extérieur d'un côté à charnière de l'organe de fermeture (12) de l'extrémité interne pour réaliser un engagement de verrouillage avec des fentes (52) à une extrémité interne (9) du conduit (2) lorsque le conduit (2) est dans une position rangée rétractée.

5. Dispositif de transfert de sécurité selon l'une quelconque des revendications précédentes, caractérisé en ce que le moyen d'arrêt déverrouillable est un mécanisme à cliquet (4) monté entre le conduit (2) et le cadre de support (3) et actionnable pour empêcher le déplacement non autorisé du conduit (2) depuis une position étendue vers la position rangée rétractée, le mécanisme à cliquet (4) comprenant une barre (55) montée à rotation sur le cadre de support (3), la barre (55) ayant une tige crénelée (56) pouvant coulisser à l'intérieur d'un cylindre à cliquet complémentaire (60) ayant un doigt d'encliquetage (62) destiné à s'engager avec le crénelage sur la barre, pour empêcher le retrait du conduit d'une position étendue vers la position rangée rétractée, la barre (55) pouvant tourner dans le cylindre à cliquet (60) pour désengager le doigt d'encliquetage des dents d'encliquetage pour déverrouiller le mécanisme à cliquet, et un moyen pour réengager le mécanisme à cliquet comprenant une contre-came (59) sur la barre (55) ou le cylindre à cliquet (60) pour l'engagement avec une came (65) sur le cylindre à cliquet (60) ou la barre (55), la came (65) ayant un profile définissant une position de fonctionnement avec le conduit (2) rétracté, de sorte qu'au retrait du conduit (2), la came (65) et la contre-came (59) s'engagent pour faire tourner la barre (55) dans une position de fonctionnement normale.

6. Dispositif de transfert de sécurité (1) selon l'une quelconque des revendications précédentes, caractérisé en ce qu'un entraînement par moteur électrique est prévu pour déplacer le conduit (2) sur le cadre de support (3).

7. Dispositif de transfert de sécurité (1) selon l'une quelconque des revendications précédentes, caractérisé en ce que le conduit (2) est monté de manière à pouvoir coulisser sur le cadre de support (3) par un moyen de type rail comprenant un certain nombre de galets (29) montés sur le conduit (2) ou le cadre de support (3), les galets (29) s'engageant à rotation avec des rails associés (26) sur le cadre de support (3) ou le conduit (2).
